# EUROPEAN PATENT SPECIFICATION

(11) **EP 1 975 675 B1**
(45) Date of publication and mention of the grant of the patent: **27.04.2016**
(21) Application number: 07006522.2
(22) Date of filing: 29.03.2007
(51) Int. Cl.: G02B 27/01, G03H 1/22

(54) **Holographic information display**
Holographische Informationsanzeige
Affichage d'informations holographiques

(43) Date of publication of application: 01.10.2008
(73) Proprietor: GM Global Technology Operations LLC, Detroit, MI 48265-3000 (US)
(72) Inventor: Brandt, Peter, 63739 Aschaffenburg (DE); Charle, Heiko, 65428 Rüsselsheim (DE); Sahlbom, Daniel, 46492 Mellerud (SE)
(74) Representative: Spitzfaden, Ralf

(56) References cited:
- EP-A- 1 467 263
- WO-A-2006/134404
- WO-A-2007/031797
- DE-A1- 3 735 983
- DE-A1- 4 445 555
- US-A1- 2003 122 828
- US-B1- 6 195 184
- US-B1- 6 819 469

## Description

The present invention relates to a holographic information display according to the preamble of independent claim 1 as known from WO 2006/134404, in particular to a holographic information display for a motor vehicle.

Head-up displays are used in motor vehicles to display information into the sight field of a driver. One kind of head-up displays uses a holographic foil attached to the windscreen. The head-up display projector projects the information content onto the foil. A driver can read or see the information by focussing onto the foil. Another kind of head-up displays uses the windscreen as a semi-transparent mirror for projecting a virtual image into the sight field of a driver. The driver perceives the image at a certain distance to the windscreen outside of the car. The virtual distance of the object to the windscreen constant and determined by the optic elements of the head-up display projector.

The head-up display projector comprises a light source, e.g. LEDs, for illuminating a liquid crystal projector and a plurality of optical elements. Static diffractive optic elements can be used instead of normal lenses and mirrors. Adapted optical elements are installed in the head-up display for adapting the projector to different wind screen models.

There is the object of a different approach for providing information to a driver of a motor vehicle.
According to a first aspect of the invention a holographic information display for a motor vehicle, wherein the holographic information display is adapted for receiving at least one information content from a vehicle device, wherein the display is at least one of a speedometer display, a tachometer display, a tank gauge display, a park assistance display, a cruise control display, a motor status display, and an air conditioner system display the holographic information display comprises a receiver for receiving the at least one information content, an image processing unit determining a hologram of a display of the vehicle device such that the hologram has a plurality of layers, separated in view line by a distance from each other, the hologram indicating the at least one information content, wherein the image processing unit determines the hologram by combining a stored image of the display of the vehicle device and the at least one information content, a holographic projector having a spatial light phase modulator generating the determined hologram and a coherent light source emitting towards the spatial light phase modulator for projecting a reconstructed hologram of the display of the vehicle device to present the at least one information content.

The spatial light phase modulator allows to generate any hologram and in particular allows to dynamically change the hologram. The holographic projector emits a light beam having a wave front determined by the hologram. As the hologram can be generated in any shape, any wave front design can be implemented. The optics of such a holographic projector is therefore not limited to geometric optics having just one focus point. A plurality of focus points and focus points shifting with time can be implemented with the holographic projector. This allows the projection of objects giving a spectator the impression of a three dimensional object and of objects at different virtual distances to the spectator.

According to an embodiment the image processing unit is an image processing unit for determining a hologram of a display having a plurality of layers separated by a distance from each other, and comprising a decision unit for determining the priority of the at least one information content and an assignment unit for assigning an information content to be displayed to one of the plurality of layers based on the priority determined.

An information content of a high priority can be displayed in a short virtual distance to a driver to gain the attention of the driver. A layer of the plurality of layers may be translucent, wherein the layer of the plurality of layers is in front of another layer of the plurality of layers. Layers behind this layer can shine through the layer and remain observable for the driver.

According to an embodiment a coherent light source is a coherent light source for emitting a first beam and a second beam having different wave lengths, and the im-. age processing unit is an image processing unit for determining a first hologram of a first part of the display to be displayed in a first colour and a second hologram of a second part of the display to be displayed in a second colour different to the first colour and for superimposing the first hologram and the second hologram to the determined hologram. Multicoloured displays can hence be generated by the same holographic projector using a single spatial light phase modulator.

An other approach for displaying multi-coloured holograms is to use a plurality of coherent light sources emitting at different wavelength. The light sources are switched on alternatingly. The spatial phase light modulator generates synchronic to the switching of the light sources different holograms. The holograms represent the differently coloured parts of the multi-coloured hologram. The switching is performed with a frequency above 50 Hz or above a switching-frequency in-perceivable for the human eye.

According to a second aspect a measuring device for a motor vehicle comprises a measuring unit measuring at least one value regarding the status of a motor vehicle, an image processing unit determining a hologram of a display indicating the at least one value measured, a holographic projector having a spatial light phase modulator generating the determined hologram and a coherent light source emitting towards the spatial light phase modulator for projecting a reconstructed hologram of the display.

The measuring unit can be at least one of a velocity gauge, a tachometer, a tank gauge, a gauge for measuring the distance to an obstacle, a temperature sensor for a coolant liquid of the motor, and a temperature sensor for the temperature in a cabin of the motor vehicle, but is not limited thereto.

The display indicating the at least one value measured can be according to one embodiment a speedometer display, a tachometer display, a tank gauge display, a park assistance display, a cruise control display, a motor status display, and a air-conditioner system display.

According to one embodiment the measuring device has a receiver for receiving at least one of a predetermined value and a predetermined value range and the display comprises a first layer indicating the at least one value measured and the second layer indicating the at least one of the received predetermined value and the received predetermined value range, wherein the first layer and the second layer being separated by a distance. The second layer may be translucent.

According to an embodiment the measuring device has a data processing unit for determining a scaling of the display based on the at least one value measured.

The present invention will be described in greater detail along with embodiments and figures. In the figures:
- Fig. 1: illustrates an embodiment of a holographic information display;

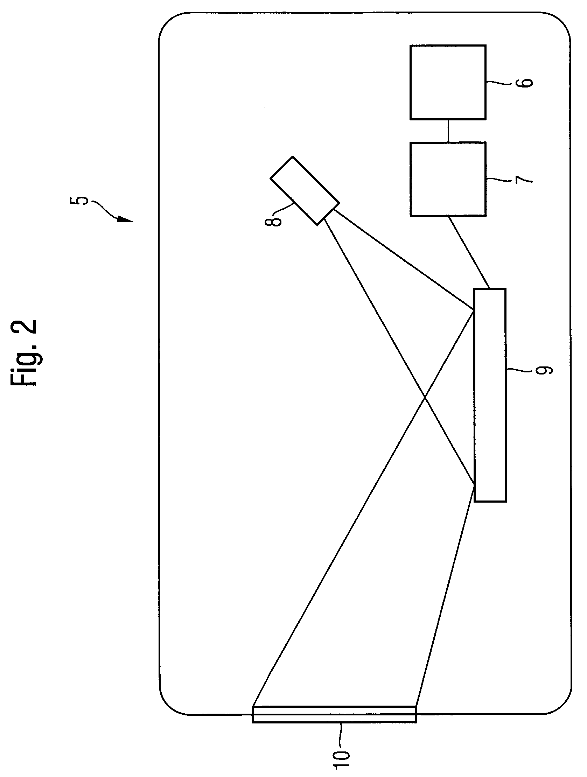

- Fig. 2: illustrates a holographic projector used in the embodiment of figure 1;
- Fig. 3: shows a display generated by the embodiment of figure 1;
- Fig. 4: shows an imaginary side view on the display of figure 3;
- Fig. 5: shows another display displayed by the embodiment of figure 1;
- Fig. 6: shows an imaginary side view of figure 5;
- Fig. 7: shows an other display displayed by the embodiment of figure 1; and
- Fig. 8: shows another display displayed by the embodiment.

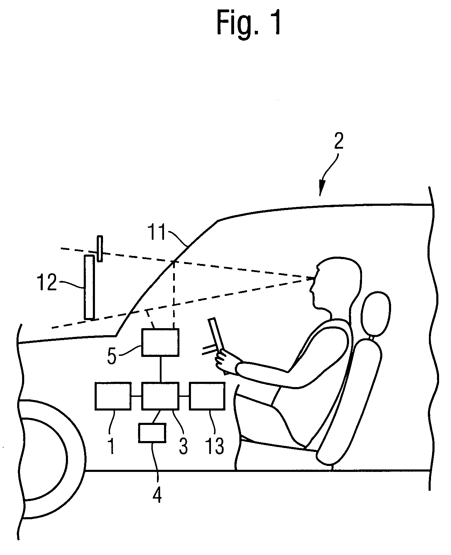

A first embodiment used for a speedometer display is illustrated along with figure 1. A velocity gauge 1 is provided in a motor vehicle 2 for measuring the speed of the motor vehicle. The velocity gauge 1 generates a signal indicating the speed and transfers the signal to an image processing unit 3.

The image processing unit 3 generates hologram of a display of a speedometer. The image processing unit 3 loads an image of a dial of the speedometer from a storage device 4. In the storage device different dials can be stored so the driver or a manufacturer of a vehicle can chose from. A design of a speedometer needle is stored in the storage device 4. The image processing unit orientates the displayed needle according to the signal obtained from the velocity gauge such that the speed of the motor vehicle is indicated by the speedometer display. The image processing unit 3 combines the needle and the dial to a single object. Based on the single object the image processing unit calculates a pattern for a hologram.

A generated hologram is transferred to a holographic projector 5.

The holographic projector 5 comprises a receiver 6, a control unit 7, a coherent light source 8, a spatial light phase modulator 9, and a window 10. The coherent light source 8 emits light with a well defined wave front. The light with its wave front is reflected by the spatial light phase modulator 9 towards the window 10. The spatial light phase modulator is divided into a plurality of individually controlled light phase modulators. Each of these light phase modulators retards the light phase of the fraction of light falling onto the surface of the respective light phase modulator. Thus, the wave front of the light reflected by the spatial light phase modulator 9 can be transformed to any desired shape.

The receiver 6 receives the hologram of the image processing unit 3. The control unit 7 divides the hologram into sections corresponding to the light phase modulators of the spatial light phase modulator 9. For each of these sections a control signal is generated and supplied to the spatial light phase modulator 9. Thus, the hologram received by the receiver 6 is transferred to the spatial light phase modulator 9.

The holographic projector 5 reconstructs the hologram and projects the reconstructed hologram into the sight field of a driver or any other spectator within the vehicle. As illustrated in Fig. 1 the windscreen 11 of the motor vehicle can be used as translucent and reflective medium to bring the projected hologram into the sight field of the driver.

The driver sees the projected hologram which corresponds to the speedometer display assembled by the image processing unit 3.

A data processing unit 13 is provided which determines velocity ranges or specific velocities of particular interest. Such a velocity of particular interest can be a speed limit, for instance. A data processing unit can be therefore connected to a navigation system or a traffic sign recognition system. A velocity range can be given based on a chosen gear.

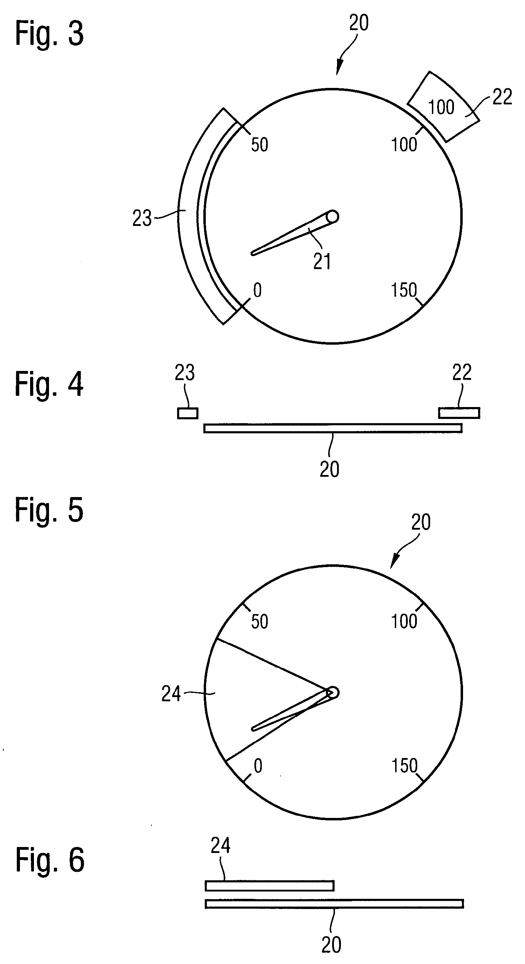

Fig. 3 shows a dial of a speedometer display in a front view. An imaginary side view of the speedometer display is given in Fig. 4 to illustrate the three dimensional impression of the speedometer. The speedometer display comprises a dial 20, a needle 21, a scale indicating several speeds. These three elements are preferably arranged in the same layer. In a second layer in front of the first layer the particular velocity and/or a particular velocity range 23 are arranged. The different virtual distance of the display elements to the driver make them distinguishable.

A velocity range can be indicated by a semitransparent layer 24 which is arranged in front of the dial 20 (see Fig. 5, 6).

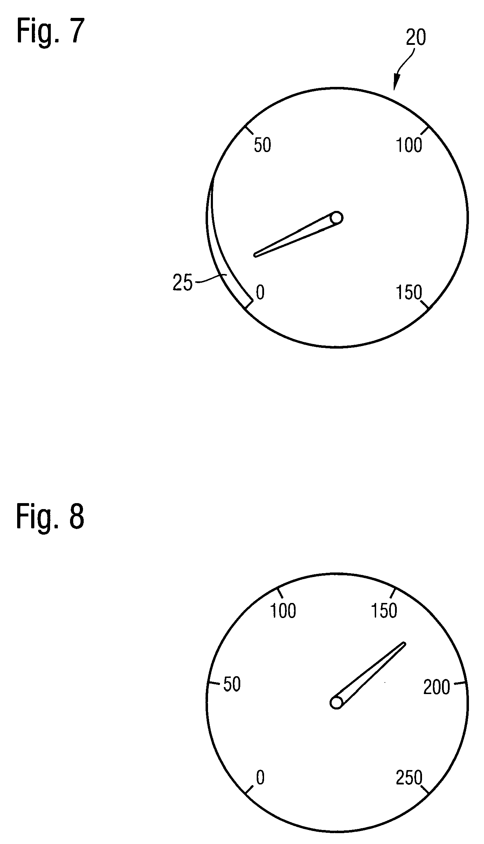

Fig. 7 illustrates a speedometer display having an area 25 displayed in a colour different to the dial 20. This coloured area can be used for warning purposes. The different colour can be implemented by different shadings, intensity etc. Another embodiment uses two light sources emitting at different wave lengths to provide this differently coloured area 25. Both light sources may be directed to the same spatial light phase modulator 9. The hologram generated by the spatial light phase modulator 9 is a superposition of two holograms, one representing the dial 20 and a second hologram representing the differently coloured area 25.

According to a further embodiment a scaling of the dial is changed based on the actual velocity. Several velocity ranges and corresponding dial scalings are stored in a memory device. A comparator compares the actual velocity to the velocity ranges and chooses the respective dial scaling.

The dial can be segmented in areas of different scalings. This can be visualized by displaying the different areas in different virtual distances to the driver.

Instead of a dial a digital display, a bar display, etc. can be used for a speedometer display.

The above displays can be combined in any way.

The particular velocity range of interest can be the adjustable range of an adapted cruise control.

The speedometer display is an illustrative embodiment for other measuring devices, like a tachometer or of a temperature sensor in the vehicle cabin, in the motor area. The angular velocity, the temperature are measured by respective devices. The signal is transferred to the image processing device.

The holographic projector can be coupled to a navigation system to display a virtual map into the sight view of a driver. The virtual map can be displayed as a two dimensional or as a three dimensional object. The navigation system generates an information content indicating at each crossing the direction to the destination. According to the temporal order the vehicle will pass the crossings the respective signs, like turn left, turn right, go straight, etc. are displayed in an increasing virtual distance to the driver.

Infotainment systems can provide an information content indicating a radio station selected, supplemental radio information, music notes, news ticker etc. This information can be displayed in different virtual distances according to their priority. The priority can be chosen by the driver himself.

The holographic projector can be connected to a cellular phone system. The address book is displayed. Each time an item of the address book, i.e. an address, is selected, the respective address is highlighted. The highlighting can be performed by displaying the selected address in a first layer wherein the address book is displayed in a second layer. The second layer is in a larger virtual distance to the spectator than the first layer.

After selecting an address and starting a communication, the address book or display elements of the phone system can be moved to large virtual distance. After a communication is established the display of the phone system is moved forward to a closer virtual distance.

The virtual distance of the display can be adapted to the speed of the vehicle. A velocity gauge measures the speed of the vehicle. The holograms are determined to have a larger virtual distance to the driver or any other spectator with increasing speed. This can be beneficial for a driver observing more distanced points of the road as he moves with higher speed. A refocusing of his eye to perceive the information content displayed by the holographic information system at the determined virtual distance can be minimized.

## Claims

1. A holographic information display for a motor vehicle, wherein the holographic information display is adapted for receiving at least one information content from a vehicle device, wherein the information is displayed as at least a speedometer display, a tachometer display, a tank gauge display, a park assistance display, a cruise control display, a motor status display, and/or an air conditioner system display and wherein the holographic information display comprises:
a receiver (6) for receiving the at least one information content,
an image processing unit determining a hologram of a display of the vehicle device such that the hologram has a plurality of layers separated in view line by a distance from each other, the hologram indicating the at least one information content, wherein the image processing unit determines the hologram by combining a stored image of the display of the vehicle device and the at least one information content, wherein the image processing unit comprises a decision unit for determining the priority of the at least one information content, and an assignment unit for assigning an information content to be displayed to one of the plurality of layers based on the priority determined;
a holographic projector (5) having a spatial light phase modulator (9) generating the determined hologram and a coherent light source (8) emitting towards the spatial light phase modulator (9) for projecting a reconstructed hologram of the display of the vehicle device to present the at least one information content.

2. The holographic information display according to claim 1, wherein a layer of the plurality of layers is translucent, the layer of the plurality of layers is in front of an other layer of the plurality of layers.

3. The holographic information display according to one of the claims 1 to 2, wherein the coherent light source (8) is a coherent light source (8) for emitting a first beam and a second beam having a different wavelengths, and
the image processing unit is an image processing unit for determining a first hologram of a first part of the display to be displayed in a first colour and a second hologram of a second part of the display to be displayed in a second colour different to the first colour, and superimposing the first hologram and the second hologram to the determined hologram.

4. The holographic information display according to one of the claims 1 to 3, wherein the coherent light source (8) is a coherent light source (8) for alternatingly emitting a first beam and a second beam having different wavelengths,
the image processing unit is an image processing unit for determining a first hologram of a first part of the display to be displayed in a first colour and a second hologram of a second part of the display to be displayed in a second colour different to the first colour, and
a synchronisation unit is provided for alternatingly generating the first and the second hologram by the spatial light phase modulator (9) synchronously to the coherent light source (8).

5. The holographic information display according to claims 1 to 4, comprising a velocity gauge measuring the velocity of the motor vehicle,
a data processing unit determining a virtual distance for the display based on the velocity of the vehicle, and wherein
the image processing unit is adapted for determining the hologram of a display indicating the at least one information content in the determined distance.

6. The holographic information display according to claims 1 to 5, having a receiver (6) for receiving at least one of a predetermined value and a predetermined value range and wherein the display comprises a first layer indicating the at least one value measured and a second layer indicating the at least one of the received predetermined value and the received predetermined value range, the first layer and the second layer being separated by a distance.

7. The holographic information display according to one of the claims 1 to 6, having a data processing unit for determining a scaling of the display based on the at least one value measured.

8. A method for displaying holographic information for a motor vehicle, wherein the holographic information is displayed as at least one of a speedometer display, a tachometer display, a tank gauge display, a park assistance display, a cruise control display, a motor status display, and an air conditioner system display, the method comprising:
receiving at least one information content from a vehicle device;
determining a hologram of a display of the vehicle device such that the hologram has a plurality of layers separated in view line by a distance from each other, the hologram indicating the at least one information content, wherein the hologram is determined by combining a stored image of the display of the vehicle device and the at least one information content, wherein priority of the at least one information content is determined, and an information content is assigned to be displayed to one of the plurality of layers based on the priority determined;
generating the determined hologram by use of a spatial light phase modulator (9); and
illuminating the spatial light phase modulator (9) using a coherent light source (8) for the projecting a reconstructed hologram of the display of the vehicle device to represent the at least one information content.

9. The method according to claim 8, wherein the method comprises :
measuring at least one value regarding the status of the motor vehicle,
wherein in the determining of the hologram of the display of the vehicle device the hologram is determined such, that the hologram indicates the at least one value measured.

10. The method according to claim 9, wherein the hologram of the display of the vehicle device is determined such that the hologram has a first layer and a second layer, the first layer being separated from the second layer by a distance, the first layer indicating the value measured and the second layer indicating at least one of a predetermined value and a predetermined value range.

11. The method according to claim 9 or 10, wherein an information content of high priority is received and the hologram of the display of the vehicle device is determined such that the hologram has a first layer and a third layer, the third layer being in front of and separated by a distance of the first layer, the first layer indicating the value measured and the third layer displaying the information content of high priority.

## Patentansprüche

1. Holographische Informationsanzeige für ein Kraftfahrzeug, wobei die holographische Informationsanzeige dafür ausgelegt ist, wenigstens einen Informationsinhalt von einer Fahrzeugeinrichtung zu empfangen, wobei die Information in Form von wenigstens einer Geschwindigkeitsmesseranzeige, einer Drehzahlmesseranzeige, einer Benzinuhranzeige, einer Parkassistenzanzeige, einer Fahrtregleranzeige, einer Motorstatusanzeige und/oder einer Klimasystemanzeige angezeigt wird und wobei die holographische Informationsanzeige Folgendes umfasst:
einen Empfänger (6) zum Empfangen des wenigstens einen Informationsinhalts,
eine Bildverarbeitungseinheit, die ein Hologramm einer Anzeige der Fahrzeugeinrichtung bestimmt, so dass das Hologramm eine Vielzahl von Schichten aufweist, die in der Sichtlinie durch einen Abstand voneinander getrennt sind, wobei das Hologramm den wenigstens einen Informationsinhalt anzeigt, wobei die Bildverarbeitungseinheit das Hologramm bestimmt, indem sie ein gespeichertes Bild der Anzeige der Fahrzeugeinrichtung und den wenigstens einen Informationsinhalt kombiniert, wobei die Bildverarbeitungseinheit Folgendes umfasst: eine Entscheidungseinheit, um die Priorität des wenigstens einen Informationsinhalts zu bestimmen, und eine Zuweisungseinheit, um auf Basis der bestimmten Priorität einer der Vielzahl von Schichten einen anzuzeigenden Informationsinhalt zuzuweisen;
einen holographischen Projektor (5) mit einem räumlichen Lichtphasenmodulator (9), der das bestimmte Hologramm erzeugt, und mit einer kohärenten Lichtquelle (8), die in Richtung auf den räumlichen Lichtphasenmodulator (9) strahlt, um ein rekonstruiertes Hologramm der Anzeige der Fahrzeugeinrichtung zu projizieren, um den wenigstens einen Informationsinhalt zu präsentieren.

2. Holographische Informationsanzeige nach Anspruch 1, wobei eine Schicht der Vielzahl von Schichten lichtdurchlässig ist, wobei sich die Schicht der Vielzahl von Schichten vor einer anderen Schicht der Vielzahl von Schichten befindet.

3. Holographische Informationsanzeige nach einem der Ansprüche 1 bis 2, wobei die kohärente Lichtquelle (8) eine kohärente Lichtquelle (8) ist, die einen ersten Strahl und einen zweiten Strahl mit unterschiedlichen Wellenlängen aussendet, und
wobei die Bildverarbeitungseinheit eine Bildverarbeitungseinheit ist, die Folgendes bestimmt: ein erstes Hologramm eines ersten Teils der Anzeige, der in einer ersten Farbe angezeigt werden soll, und ein zweites Hologramm eines zweiten Teils der Anzeige, der in einer zweiten Farbe angezeigt werden soll, die sich von der ersten Farbe unterscheidet, und die das erste Hologramm und das zweite Hologramm zu dem bestimmten Hologramm übereinanderlagert.

4. Holographische Informationsanzeige nach einem der Ansprüche 1 bis 3, wobei die kohärente Lichtquelle (8) eine kohärente Lichtquelle (8) ist, die abwechselnd einen ersten Strahl und einen zweiten Strahl mit unterschiedlichen Wellenlängen aussendet,
wobei die Bildverarbeitungseinheit eine Bildverarbeitungseinheit ist, die Folgendes bestimmt: ein erstes Hologramm eines ersten Teils der Anzeige, der in einer ersten Farbe angezeigt werden soll, und ein zweites Hologramm eines zweiten Teils der Anzeige, der in einer zweiten Farbe angezeigt werden soll, die sich von der ersten Farbe unterscheidet, und
wobei eine Synchronisationseinheit vorgesehen ist, um synchron mit der kohärenten Lichtquelle (8) durch den räumlichen Lichtphasenmodulator (9) abwechselnd das erste und das zweite Hologramm zu erzeugen.

5. Holographische Informationsanzeige nach den Ansprüchen 1 bis 4, umfassend einen Geschwindigkeitsmesser, der die Geschwindigkeit des Kraftfahrzeugs misst,
wobei eine Datenverarbeitungseinheit auf Basis der Geschwindigkeit des Fahrzeugs einen virtuellen Abstand für die Anzeige bestimmt, und wobei
die Bildverarbeitungseinheit dafür ausgelegt ist, das Hologramm einer Anzeige zu bestimmen, die den wenigstens einen Informationsinhalt in dem bestimmten Abstand anzeigt.

6. Holographische Informationsanzeige nach den Ansprüchen 1 bis 5, umfassend einen Empfänger (6), um wenigstens eines aus einem vorbestimmten Wert und einem vorbestimmten Wertebereich zu empfangen, wobei die Anzeige Folgendes umfasst: eine erste Schicht, die den wenigstens einen gemessenen Wert anzeigt, und eine zweite Schicht, die wenigstens eines aus dem empfangenen vorbestimmten Wert und dem empfangenen vorbestimmten Wertebereich anzeigt, wobei die erste Schicht und die zweite Schicht durch einen Abstand voneinander getrennt sind.

7. Holographische Informationsanzeige nach einem der Ansprüche 1 bis 6, umfassend eine Datenverarbeitungseinheit, um auf Basis des wenigstens einen gemessenen Werts eine Skalierung der Anzeige zu bestimmen.

8. Verfahren zum Anzeigen einer holographischen Information über ein Kraftfahrzeug, wobei die holographische Information in Form von wenigstens einer aus einer Geschwindigkeitsmesseranzeige, einer Drehzahlmesseranzeige, einer Benzinuhranzeige, einer Parkassistenzanzeige, einer Fahrtregleranzeige, einer Motorstatusanzeige und einer Klimasystemanzeige angezeigt wird, wobei das Verfahren Folgendes umfasst:
Empfangen von wenigstens einem Informationsinhalt von einer Fahrzeugeinrichtung;
Bestimmen eines Hologramms einer Anzeige der Fahrzeugeinrichtung, so dass das Hologramm eine Vielzahl von Schichten aufweist, die in der Sichtlinie durch einen Abstand voneinander getrennt sind, wobei das Hologramm den wenigstens einen Informationsinhalt anzeigt, wobei das Hologramm bestimmt wird, indem ein gespeichertes Bild der Anzeige der Fahrzeugeinrichtung und der wenigstens eine Informationsinhalt kombiniert werden, wobei die Priorität des wenigstens einen Informationsinhalts bestimmt wird und wobei auf Basis der bestimmten Priorität einer der Vielzahl von Schichten ein anzuzeigender Informationsinhalt zugewiesen wird;
Erzeugen des bestimmten Hologramms mithilfe eines räumlichen Lichtphasenmodulators (9); und
Beleuchten des räumlichen Lichtphasenmodulators (9) mithilfe einer kohärenten Lichtquelle (8) zur Projektion eines rekonstruierten Hologramms der Anzeige der Fahrzeugeinrichtung, um den wenigstens einen Informationsinhalt darzustellen.

9. Verfahren nach Anspruch 8, wobei das Verfahren Folgendes umfasst:
Messen wenigstens eines Werts betreffend den Status des Kraftfahrzeugs,
wobei bei der Bestimmung des Hologramms der Anzeige der Fahrzeugeinrichtung das Hologramm derart bestimmt wird, dass das Hologramm den wenigstens einen gemessenen Wert anzeigt.

10. Verfahren nach Anspruch 9, wobei das Hologramm der Anzeige der Fahrzeugeinrichtung derart bestimmt wird, dass das Hologramm eine erste Schicht und eine zweite Schicht umfasst, wobei die erste Schicht durch einen Abstand von der zweiten Schicht getrennt ist, wobei die erste Schicht den gemessenen Wert anzeigt und die zweite Schicht wenigstens eines aus einem vorbestimmten Wert und einem vorbestimmten Wertebereich anzeigt.

11. Verfahren nach Anspruch 9 oder 10, wobei ein Informationsinhalt von hoher Priorität empfangen wird und das Hologramm der Anzeige der Fahrzeugeinrichtung derart bestimmt wird, dass das Hologramm eine erste Schicht und eine dritte Schicht umfasst, wobei die dritte Schicht vor der ersten Schicht angeordnet ist und durch einen Abstand von dieser getrennt ist, wobei die erste Schicht den gemessenen Wert anzeigt und die dritte Schicht den Informationsinhalt von hoher Priorität anzeigt.

## Revendications

1. Affichage d'informations holographiques pour un véhicule à moteur, lequel affichage d'informations holographiques est adapté pour recevoir au moins un contenu d'informations d'un appareil de bord, dans lequel les information sont affichées sous la forme, au minimum, d'un affichage de compteur de vitesse, d'un affichage de compteur kilométrique, d'un affichage de jauge de carburant, d'un affichage d'aide au stationnement, d'un affichage de régulateur de vitesse, d'un affichage d'état du moteur et/ou d'un affichage de système de climatisation, et lequel affichage d'informations holographiques comprend :
un récepteur (6) pour recevoir l'au moins un contenu d'informations,
une unité de traitement d'images qui définit un hologramme d'un affichage de l'appareil de bord de telle manière que l'hologramme comporte plusieurs couches séparées les unes des autres d'une certaine distance dans l'axe du regard, l'hologramme visualisant l'au moins un contenu d'informations, l'unité de traitement d'images définissant l'hologramme en combinant une image en mémoire de l'affichage de l'appareil de bord et l'au moins un contenu d'informations, l'unité de traitement d'images comprenant une unité de décision pour définir la priorité de l'au moins un contenu d'informations, et une unité d'affectation pour affecter un contenu d'informations à afficher à l'une des plusieurs couches en fonction de la priorité définie ;
un projecteur holographique (5) possédant un modulateur spatial de phase de lumière (9) qui génère l'hologramme défini et une source de lumière cohérente (8) émettant vers le modulateur spatial de phase de lumière (9) afin de projeter un hologramme reconstruit de l'affichage de l'appareil de bord pour présenter l'au moins un contenu d'informations.

2. Affichage d'informations holographiques selon la revendication 1, dans lequel une couche parmi les plusieurs couches est translucide et la couche parmi les plusieurs couches se trouve devant une autre couche parmi les plusieurs couches.

3. Affichage d'informations holographiques selon l'une des revendications 1 à 2, dans lequel la source de lumière cohérente (8) est une source de lumière cohérente (8) destinée à émettre un premier faisceau et un deuxième faisceau ayant des longueurs d'ondes différentes et l'unité de traitement d'images est une unité de traitement d'images destinée à définir un premier hologramme d'une première partie de l'affichage à afficher dans une première couleur et un deuxième hologramme d'une deuxième partie de l'affichage à afficher dans une deuxième couleur différente de la première couleur, et à superposer le premier hologramme et le deuxième hologramme à l'hologramme défini.

4. Affichage d'informations holographiques selon l'une des revendications 1 à 3, dans lequel la source de lumière cohérente (8) est une source de lumière cohérente (8) destinée à émettre alternativement un premier faisceau et un deuxième faisceau ayant des longueurs d'ondes différentes,
l'unité de traitement d'images est une unité de traitement d'images destinée à définir un premier hologramme d'une première partie de l'affichage à afficher dans une première couleur et un deuxième
hologramme d'une deuxième partie de l'affichage à afficher dans une deuxième couleur différente de la première couleur, et
une unité de synchronisation est prévue pour faire générer alternativement le premier hologramme et le deuxième au modulateur spatial de phase de lumière (9) de façon synchrone avec la source de lumière cohérente (8).

5. Affichage d'informations holographiques selon les revendications 1 à 4, comprenant
un capteur de vitesse qui mesure la vitesse du moteur du véhicule,
une unité de traitement de données qui détermine une distance virtuelle pour l'affichage à partir de la vitesse du véhicule, et dans lequel
l'unité de traitement d'images est adaptée pour déterminer l'hologramme d'un affichage indiquant l'au moins un contenu d'informations à la distance déterminée.

6. Affichage d'informations holographiques selon les revendications 1 à 5, possédant un récepteur (6) pour recevoir au moins soit une valeur prédéterminée, soit une plage de valeurs prédéterminées et dans lequel l'affichage comprend une première couche visualisant l'au moins une valeur mesurée et une deuxième couche visualisant au moins soit la valeur prédéterminée reçue, soit la plage de valeurs prédéterminées reçue, la première couche et la deuxième couche étant séparées par une certaine distance.

7. Affichage d'informations holographiques selon l'une des revendications 1 à 6, comprenant une unité de traitement de données destinée à déterminer une mise à l'échelle de l'affichage sur la base de l'au moins une valeur mesurée.

8. Procédé pour afficher des informations holographiques pour un véhicule à moteur, dans lequel les informations holographiques sont affichées sous la forme, au minimum, d'un affichage de compteur de vitesse, d'un affichage de compteur kilométrique, d'un affichage de jauge de carburant, d'un affichage d'aide au stationnement, d'un affichage de régulateur de vitesse, d'un affichage d'état du moteur et/ou d'un affichage de système de climatisation, lequel procédé comprend :
la réception d'au moins un contenu d'informations d'un appareil embarqué ;
la définition d'un hologramme d'un affichage de l'appareil de bord de telle sorte que l'hologramme comprenne plusieurs couches séparées les unes des autres d'une certaine distance dans l'axe du regard,
l'hologramme visualisant l'au moins un contenu d'informations, l'hologramme étant défini en combinant une image mémorisée de l'affichage de l'appareil embarqué et l'au moins un contenu d'informations, la priorité de l'au moins contenu d'informations étant définie et un contenu d'informations à afficher étant affecté à l'une des plusieurs couches en fonction de la priorité définie ;
la génération de l'hologramme défini à l'aide d'un modulateur spatial de phase de lumière (9); et
l'illumination du modulateur spatial de phase de lumière (9) avec une source de lumière cohérente (8) pour projeter un hologramme reconstitué de l'affichage de l'appareil embarqué de manière à représenter l'au moins un contenu d'informations.

9. Procédé selon la revendication 8, qui comprend la mesure d'au moins une valeur concernant l'état du véhicule à moteur, l'hologramme étant défini, pendant la définition de l'hologramme de l'affichage de l'appareil de bord, de telle façon qu'il visualise l'au moins une valeur mesurée.

10. Procédé selon la revendication 9, dans lequel l'hologramme de l'affichage de l'appareil de bord est défini de telle manière qu'il comporte une première couche et une deuxième couche, la première couche étant séparée de la deuxième couche par une certaine distance, la première couche indiquant la valeur mesurée et la deuxième couche indiquant au moins soit une valeur prédéterminée, soit une plage de valeurs prédéterminée.

11. Procédé selon la revendication 9 ou 10, dans lequel un contenu d'informations prioritaire est reçu et l'hologramme de l'affichage de l'appareil de bord est défini de telle manière qu'il comporte une première couche et une troisième couche, la troisième couche se trouvant devant la première couche et étant séparée de celle-ci par une certaine distance, la première couche indiquant la valeur mesurée et la troisième couche affichant le contenu d'informations prioritaire.
